# EUROPEAN PATENT SPECIFICATION

(11) **EP 0 437 942 B1**
(45) Date of publication and mention of the grant of the patent: **23.11.1994**
(21) Application number: 90313519.2
(22) Date of filing: 12.12.1990
(51) Int. Cl.: C08J 5/18, C08L 67/02

(54) **Polymeric film**
Polymerfilm
Film polymère

(30) Priority: 19.01.1990 GB 9001265
(43) Date of publication of application: 24.07.1991
(73) Proprietor: IMPERIAL CHEMICAL INDUSTRIES PLC, London SW1P 3JF (GB)
(72) Inventor: Goss, Catherine Jane, Stokesley, Cleveland (GB); Rhoades, Gary Victor, Eaglescliffe,Stockton on Tees, Cleveland (GB)
(74) Representative: Rhind, John Lessels

(56) References cited:
- EP-A- 0 005 510
- EP-A- 0 297 423
- BE-A- 677 743
- FR-A- 2 194 741
- FR-A- 2 255 346
- FR-A- 2 295 066

## Description

This invention relates to a polymeric film, and in particular to a linear polyester film.

Oriented films of linear polyesters, such as polyethylene terephthalate, are of utility in a wide range of applications including magnetic recording media - such as tapes and discs, as supporting substrates for light-sensitive emulsions, pressure-sensitive adhesives and metal layers, as decorative drapes and electrical insulants, and particularly as packaging films.

In certain circumstances, in which an oriented polyester film is subjected to repeated flexing, the film structure may crack or develop pin holes which detract from the moisture and gas barrier characteristics of the film and may eventually lead to total failure of the film. A number of ways of improving the flex-crack resistance of polyester films have been suggested. For example US patent 4771108 describes a polyester film comprising a blend of a linear polyester, an incompatible polyolefin resin and an ionomer resin. Alternatively, an article on page 263 of the 1988 Polymers, Laminations and Coating Conference describes a polyester film exhibiting improved flex-crack resistance which contains a copolyester elastomer. Unfortunately, such methods result in an unacceptable increase in the haze of polyester films, which is an important property particularly in certain packaging applications where optical clarity is sought.

FR-A-2295066 discloses a polyester film, having flexing resistance and pinhole resistance, which comprises a copolyester containing a polyester segment and a soft polymer or polyether segment.

We have now devised a polyester film exhibiting improved flex-crack resistance and/or low haze.

Accordingly, the present invention provides a self-supporting polyester film comprising a molecularly oriented blend comprising greater than or equal to 50% by weight of at least one linear polyester and less than or equal to 50% by weight of at least one aromatic copolyesterether comprising a mixture of butylene terephthalate and hexylene terephthalate.

The invention also provides a method of producing a self-supporting polyester film which comprises a molecularly oriented blend comprising greater than or equal to 50% by weight of at least one linear polyester and less than or equal to 50% by weight of at least one aromatic copolyesterether comprising a mixture of butylene terephthalate and hexylene terephthalate, said method comprising forming an extrudate of the molten linear polyester containing the copolyesterether, quenching the extrudate, and orienting the quenched extrudate in at least one direction.

By a self-supporting film is meant a self-supporting structure capable of independent existence in the absence of a supporting base.

By a major amount of linear polyester is meant greater than or equal to 50, preferably greater than or equal to 65, more preferably greater than or equal to 80, and particularly from 90 to 95% by weight relative to the total components. By a minor amount of copolyester is meant less than or equal to 50, preferably less than or equal to 35, more preferably less than or equal to 20, and particularly from 5 to 10% by weight relative to the total components.

A synthetic linear polyester suitable for use in the formation of a film according to the invention may be obtained by condensing one or more dicarboxylic acids or their lower alkyl (up to 6 carbon atoms) diesters, eg terephthalic acid, isophthalic acid, phthalic acid, 2,5-, 2,6- or 2,7-naphthalenedicarboxylic acid, succinic acid, sebacic acid, adipic acid, azelaic acid, 4,4'- diphenyldicarboxylic acid, hexahydro-terephthalic acid or 1,2-bis-p- carboxyphenoxyethane (optionally with a monocarboxylic acid, such as pivalic acid) with one or more glycols, particularly an aliphatic glycol, eg ethylene glycol, 1,3-propanediol, 1,4-butanediol, neopentyl glycol and 1,4-cyclohexane dimethanol. A polyethylene terephthalate film is particularly preferred, especially such a film which has been biaxially oriented by sequential stretching in two mutually perpendicular directions, typically at a temperature in the range 70 to 125°C, and preferably heat set, typically at a temperature in the range 150 to 250°C, for example - as described in British patent GB-A-838708.

A copolyesterether employed in the present invention is a block copolymer comprising predominantly an aromatic polyester block as a hard segment, and a polyether block as a soft segment. The hard polyester block is suitably formed by condensing one or more aromatic dicarboxylic acids or ester derivatives thereof with one or more glycols, particularly an aliphatic glycol. Examples of dicarboxylic acids include terephthalic, isophthalic, phthalic or naphthalenedicarboxylic acid. Examples of glycols include ethylene glycol, 1,3-propanediol, 1,4-butanediol, neopentyl glycol, 1,6-hexanediol and 1,4-cyclohexane dimethanol. The polyester block comprises a mixture of butylene terephthalate and hexylene terephthalate, particularly as blocks of polybutylene terephthalate and polyhexylene terephthalate, preferably in a weight ratio of 0.33 to 3.0:1.0, and more preferably 0.8 to 1.2:1.0. The soft polyether block is suitably formed from one or more glycols, for example ethylene glycol, 1,3-propanediol, 1,4-butanediol, neopentyl glycol, 1,6-hexanediol and 1,4-cyclohexane dimethanol. The polyether block is preferably formed from one or more polyether glycols, preferably containing from 2 to 4 carbon atoms between ether groups; for example polyethylene glycol, polypropylene glycol, and particularly polybutylene glycol. The ratio of hard:soft block in the polyesterether elastomer may vary over a wide range, but is preferably within the range of from 30 to 97:3 to 70, more preferably from 50 to 90:10 to 50, and particularly from 55 to 70:30 to 45 weight %. The amount of polyether present in the polyester film is preferably from 0.1 to 25%, more preferably 0.5 to 10%, and particularly 1 to 5%.

A copolyesterether employed in the present invention preferably has a flexural modulus (measured at 23°C according to ASTM D790) of 200 MPa or less, and more preferably in the range from 50 to 100 MPa. In addition, preferred copolyesterethers have a Shore hardness (measured at 23°C on the D scale according to DIN 53505) of 60 or less, particularly in the range from 35 to 45.

The copolyesterethers can be prepared by conventional polymerisation techniques, which are well known to those skilled in the art.

Mixing of the linear polyester and copolyesterether components of the blend may be effected by conventional blending techniques, for example by thoroughly mixing the resin components in powder or granular form in a tumble blender. The components may be precompounded via a single or twin screw before being fed to the film extruder. Alternatively, the copolyesterether may be fed separately to the extruder from which the linear polyester is extruded to form a film.

The polyester film according to the invention may be uniaxially oriented, but is preferably biaxially oriented by drawing in two mutually perpendicular directions in the plane of the film to achieve a satisfactory combination of mechanical and physical properties. Simultaneous biaxial orientation may be effected by extruding a thermoplastics polymeric tube which is subsequently quenched, reheated and then expanded by internal gas pressure to induce transverse orientation, and withdrawn at a rate which will induce longitudinal orientation. Sequential stretching may be effected in a stenter process by extruding the thermoplastics material as a flat extrudate which is subsequently stretched first in one direction and then in the other mutually perpendicular direction. Generally, it is preferred to stretch firstly in the longitudinal direction, ie the forward direction through the film stretching machine, and then in the transverse direction. A stretched substrate film may be, and preferably is, dimensionally stabilised by heat-setting under dimensional restraint at a temperature above the glass transition temperature thereof.

A film according to the invention may be coated on one or both surfaces with one or more additional coating, ink and/or lacquer layers, for example to form a laminate or composite which exhibits improved properties, compared to the component materials. Prior to the deposition of a coating medium onto the polyester substrate the exposed surface thereof may, if desired, be subjected to a chemical or physical surface-modifying treatment to improve the bond between that surface and the subsequently applied coating layer. A preferred treatment, because of its simplicity and effectiveness, is to subject the exposed surface of the substrate to a high voltage electrical stress accompanied by corona discharge. Alternatively, the substrate may be pretreated with an agent known in the art to have a solvent or swelling action on the substrate polyester. Examples of such agents include a halogenated phenol dissolved in a common organic solvent eg a solution of p-chloro-m-cresol, 2,4-dichlorophenol, 2,4,5- or 2,4,6- trichlorophenol or 4-chlororesorcinol in acetone or methanol.

The coating medium may be applied to an already oriented film substrate, but application of the coating medium is preferably effected before or during the stretching operation.

In particular, it is preferred that the coating medium should be applied to the film substrate between the two stages (longitudinal and transverse) of a thermoplastics film biaxial stretching operation. Such a sequence of stretching and coating is especially preferred for the production of a coated linear polyester film substrate, such as a coated polyethylene terephthalate film comprising the copolyesterether, which is preferably firstly stretched in the longitudinal direction over a series of rotating rollers, coated with the coating layer, and then stretched transversely in a stenter oven, preferably followed by heat setting.

In a preferred form of the invention the film comprises an additional layer, particularly a heat-sealable layer. The heat-sealable layer suitably comprises a polyester resin, particularly a copolyester resin derived from one or more dibasic aromatic carboxylic acids, such as terephthalic acid, isophthalic acid and hexahydroterephthalic acid, and one or more glycols, such as ethylene glycol, diethylene glycol, triethylene glycol and neopentyl glycol. Typical copolyesters which provide satisfactory heat-sealable properties are those of ethylene terephthalate and ethylene isophthalate, especially in the molar ratios of from 50 to 90 mole % ethylene terephthalate and correspondingly from 50 to 10 mole % ethylene isophthalate. Preferred copolyesters comprise from 65 to 85 mole % ethylene terephthalate and from 35 to 15 mole % ethylene isophthalate especially a copolyester of about 82 mole % ethylene terephthalate and about 18 mole % ethylene isophthalate.

Formation of a heat-sealable layer on the polyester substrate layer may be effected by conventional techniques - for example, by casting the polymer onto a preformed substrate layer. Conveniently, however, formation of a composite sheet (substrate and heat-sealable layer) is effected by coextrusion, either by simultaneous coextrusion of the respective film-forming layers through independent orifices of a multi-orifice die, and thereafter uniting the still molten layers, or, preferably, by single-channel coextrusion in which molten streams of the respective polymers are first united within a channel leading to a die manifold, and thereafter extruded together from the die orifice under conditions of streamline flow without intermixing thereby to produce a composite sheet.

A coextruded sheet is stretched to effect molecular orientation of the substrate, and preferably heat-set. Generally, the conditions applied for stretching the substrate layer will induce partial crystallisation of the heat-sealable polymer and it is therefore preferred to heat set under dimensional restraint at a temperature selected to develop the desired morphology of the heat-sealing layer. Thus, by effecting heat-setting at a temperature below the crystalline melting temperature of the heat-sealable polymer and permitting or causing the composite to cool, the heat-sealable polymer will remain essentially crystalline. However, by heat-setting at a temperature greater than the crystalline melting temperature of the heat-sealing polymer, the latter will be rendered essentially amorphous. Heat-setting of a composite sheet comprising a polyester substrate and a copolyester heat-sealable layer is conveniently effected at a temperature within a range of from 175 to 200°C to yield a substantially crystalline heat-sealable layer, or from 200 to 250°C to yield an essentially amorphous heat-sealable layer. An essentially amorphous heat-sealable layer is preferred.

The thickness of the heat-sealable layer may vary over a wide range but generally will not exceed 50 µm, and is preferably within a range of from 0.5 to 25 µm, and particularly from 0.5 to 10 µm.

The film may, if desired, contain any of the additives conventionally employed in the manufacture of polymeric films. Thus, agents such as dyes, pigments, voiding agents, lubricants, anti-oxidants, anti-blocking agents, surface active agents, slip aids, gloss-improvers, prodegradants, ultra-violet light stabilisers, viscosity modifiers and dispersion stabilisers may be incorporated as appropriate. In particular a substrate layer may comprise a particulate filler, such as silica, of small particle size, and preferably should be present in a small amount, not exceeding 1.0%, more preferably less than 0.5%, and particularly less than 0.2%, by weight of the substrate. The film additives should preferably not increase the haze of the film significantly, ie should preferably not result in a film having a haze factor above the preferred ranges given below.

Films in accordance with the invention may be prepared in a range of thicknesses governed primarily by the ultimate application for which a particular film is to be employed. Films, having a total thickness in a range extending from 2.5 to 250 µm are of general utility, although for packaging applications a packaging film of from about 10 to 50 µm in total thickness is generally suitable.

The propensity of the films to develop pinhole defects on repeated flexing was assessed using a Gelbo (registered trade mark) flex tester. The latter comprises a pair of axially opposed circular jaw heads of 90 mm diameter, one head remaining stationary while the opposed movable head is simultaneously advanced a distance of 140 mm towards the stationary head and rotated through an angle of 400° about the axis of the tester, and then returned to its original position. Advancement, rotation, retraction and counter-rotation of the movable head constitutes one cycle, and the tester is operated at a speed of 40 cycles/minute. In the test, a sheet of film of A4 dimensions (ie approximately 210 x 297 mm), is formed into a cylindrical tube, the opposed ends of which are gripped in the respective jaw heads of the tester. The film is then flexed for 1000 cycles. Pinholes formed in the film by flexing are detected by placing the tested flat film sample on a sheet of diazo paper, and rubbing the exposed film surface with a solution of 0.88 ammonia. Pinholes in the film are revealed by the appearance of corresponding red/brown spots on the diazo paper, and are readily counted.

The haze of the films was measured with a Gardner (registered trade mark) Hazemeter by a method conforming to ASTM D-1003. The haze measured is referred to as wide angle haze and is defined as the percentage of transmitted light which in passing through the film deviates from the incident beam by foreward scattering. Only light flux which deviates by more than 2.5° is considered haze. The haze factor of a film is calculated by dividing the haze of a film by the film thickness measured in microns. Polyester films according to the invention preferably have a haze factor of less than 1.0, more preferably in a range of from 0.005 to 0.8, and particularly from 0.01 to 0.5.

The invention is illustrated by reference to the following Examples.

### Example 1

Granules of polyethylene terephthalate and a copolyesterether (comprising by weight approximately 37.5% butylene terephthalate, 30.5% hexylene terephthalate and 32.0% polybutylene glycol - designated copolyesterether A (flexural modulus of 90 MPa and Shore hardness of 38 - measured as hereinbefore described)) were tumble blended to yield a blend containing 5% by weight of the copolyesterether relative to the total components.

The blend was extruded as a flat extrudate, rapidly quenched to render the material amorphous, and then stretched at a temperature of about 100°C to about 3.5 times its original dimensions in each of two mutually perpendicular directions. The oriented film was heat-set at constant dimensions at a temperature of about 220°C. The resultant film had a thickness of approximately 16 µm, a haze factor of 0.20 (measured as hereinbefore described), and when the film was tested on a Gelbo flex tester (as hereinbefore described) the number of pinholes developed in a sheet of A4 dimensions (average of 5 test samples) was 5 (the results are also given in Table 1).

### Examples 2 to 4

The procedure of Example 1 was repeated except that the amount of copolyesterether A present in the blend was increased to 10, 15 and 20% by weight respectively, relative to the total components. Resultant film thickness, haze factor and Gelbo flex results are given in Table 1.

### Examples 5 to 8

The procedure of Example 1 was repeated except that the copolyesterether used comprised by weight approximately 42.2% butylene terephthalate, 41.0% hexylene terephthalate and 16.8% polybutylene glycol (designated copolyesterether B (flexural modulus of 170 MPa and Shore hardness of 45 - measured as hereinbefore described)), and the amount present in the blend was varied, being 5, 10, 20 and 30% by weight respectively, relative to the total components. Resultant film thickness, haze factor and Gelbo flex results are given in Table 1.

### Example 9

The procedure of Example 1 was repeated except that the copolyesterether used comprised by weight approximately 65.6% butylene terephthalate, 21.8% hexylene terephthalate and 12.6% polybutylene glycol (designated copolyesterether C (flexural modulus of 600 MPa and Shore hardness of 63 - measured as hereinbefore described)), and the amount present in the blend was 10% by weight relative to the total components. Resultant film thickness, haze factor and Gelbo flex results are given in Table 1.

### Example 10

This is a comparative Example not according to the invention. The procedure of Example 1 was repeated except that no copolyesterether was present. Resultant film thickness, haze factor and Gelbo flex results are given in Table 1.

### Examples 11 and 12

These are comparative Examples not according to the invention. The procedure of Example 1 was repeated except that Ecdel (registered trade mark) 9966 copolyester elastomer (comprising 1,4-cyclohexane dicarboxylic acid as the dicarboxylic acid component, supplied by Eastman Chemical Products Inc) was used instead of copolyesterether A, and the amount of Ecdel present in the blend was 10 and 20% by weight respectively, relative to the total components. Resultant film thickness, haze factor and Gelbo flex results are given in Table 1.

### Example 13

Separate streams of a first substrate polymer mixture comprising components described in Example 1, and a second polymer comprising a copolyester of 82 mole % ethylene terephthalate and 18 mole % of ethylene isophthalate were supplied from separate extruders to a single channel coextrusion assembly, and extruded through a film-forming die onto a water cooled rotating, quenching drum to yield an amorphous cast composite extrudate. The cast extrudate was heated to a temperature of about 80°C and then stretched longitudinally at a forward draw ratio of 2.9:1. The film was passed into a stenter oven, where the film was dried and stretched in the sideways direction to approximately 3.2 times its original dimensions. The biaxially stretched film was heat set at a temperature of about 205°C. Final film thickness was 23 µm, the copolyester layer being 4 µm thick. The film had a haze factor of 0.61 and a Gelbo flex of 0.9.

The heat-seal strength of the film was measured by sealing the copolyester layer to itself at 140°C for 2 seconds under a pressure of 1 Kgcm⁻², cooling to room temperature, and measuring the force required under linear tension per unit width of seal to peel the sealed films apart at a constant speed of 5.08 mms⁻¹. The heat-seal strength of the film was 613 g/25 mm (240.6 Nm⁻¹). For comparative purposes attempts were made to heat-seal substrate layers together, but without success, indicating that the presence of the copolyester layer is essential in producing a heat-sealable film.

The above examples illustrate the improved properties of polyester films of the present invention.

**TABLE 1**

| EXAMPLE No | COPOLYESTERETHER | | FILM THICKNESS (µm) | HAZE FACTOR | GELBO FLEX* (No pinholes) |
|---|---|---|---|---|---|
| | SAMPLE | CONCENTRATION (weight %) | | | |
| 1 | A | 5 | 16 | 0.20 | 5 |
| 2 | A | 10 | 18 | 0.46 | 0.2 |
| 3 | A | 15 | 19 | 0.63 | 0.8 |
| 4 | A | 20 | 22 | 0.69 | 0.6 |
| 5 | B | 5 | 16 | 0.10 | 15 |
| 6 | B | 10 | 17 | 0.25 | 11 |
| 7 | B | 20 | 19 | 0.46 | 14 |
| 8 | B | 30 | 15 | 0.77 | 8 |
| 9 | C | 10 | 17 | 0.16 | 16 |
| 10 (Comparative) | NONE | NONE | 16 | 0.006 | 32 |
| 11 (Comparative) | ECDEL | 10 | 18 | 1.17 | 1.8 |
| 12 (Comparative) | ECDEL | 20 | 19 | 1.72 | 1.2 |

| | | | | | |
|---|---|---|---|---|---|
| * mean of five sheets | | | | | |

## Claims

1. A self-supporting polyester film comprising a molecularly oriented blend comprising greater than or equal to 50% by weight of at least one linear polyester and less than or equal to 50% by weight of at least one aromatic copolyesterether comprising a mixture of butylene terephthalate and hexylene terephthalate.

2. A polyester film according to claim 1 wherein the copolyesterether comprises polybutylene glycol.

3. A polyester film according to either one of claims 1 and 2 wherein the linear polyester comprises polyethylene terephthalate.

4. A polyester film according to any one of the preceding claims wherein the polyester film has a haze factor of less than 1.0.

5. A polyester film according to any one of the preceding claims wherein the polyester film additionally comprises a heat-sealable layer comprising a copolyester.

6. A polyester film according to claim 5 wherein the copolyester comprises ethylene terephthalate and ethylene isophthalate.

7. A method of producing a self-supporting polyester film which comprises a molecularly oriented blend comprising greater than or equal to 50% by weight of at least one linear polyester and less than or equal to 50% by weight of at least one aromatic copolyesterether comprising a mixture of butylene terephthalate and hexylene terephthalate, said method comprising forming an extrudate of the molten linear polyester containing the copolyesterether, quenching the extrudate, and orienting the quenched extrudate in at least one direction.

## Patentansprüche

1. Selbsttragender Polyesterfilm, umfassend eine molekular orientierte Mischung, umfassend 50 oder mehr Gew.-% wenigstens eines linearen Polyesters und 50 oder weniger Gew.-% wenigstens eines aromatischen Copolyesterethers, umfassend eine Mischung aus Butylenterephthalat und Hexylenterephthalat.

2. Polyesterfilm nach Anspruch 1, worin der Polyesterether Polybutylenglycol umfaßt.

3. Polyesterfilm nach einem der Ansprüche 1 und 2, worin der lineare Polyester Polyethylenterephthalat umfaßt.

4. Polyesterfilm nach einem der vorhergehenden Ansprüche, worin der Polyesterfilm einen Trübungsfaktor von weniger als 1,0 besitzt.

5. Polyesterfilm nach einem der vorhergehenden Ansprüche, worin der Polyesterfilm zusätzlich eine Heißklebeschicht umfaßt, die einen Copolyester umfaßt.

6. Polyesterfilm nach Anspruch 5, worin der Copolyester Ethylenterephthalat und Ethylenisophthalat umfaßt.

7. Verfahren zur Herstellung eines selbsttragenden Polyesterfilms, umfassend eine molekular orientierte Mischung, umfassend 50 oder mehr Gew.-% wenigstens eines linearen Polyesters und 50 oder weniger Gew.-% wenigstens eines aromatischen Copolyesterethers, umfassend eine Mischung aus Butylenterephthalat und Hexylenterephthalat, wobei das Verfahren umfaßt, daß ein Extrudat aus dem geschmolzenen linearen Polyester, der den Copolyesterether enthält, gebildet wird, das Extrudat abgeschreckt wird und das abgeschreckte Extrudat in wenigstens einer Richtung orientiert wird.

## Revendications

1. Film de polyester auto-porteur comprenant un mélange orienté à l'échelle moléculaire comprenant une quantité supérieure ou égale à 50% en poids d'au moins un polyester linéaire et une quantité inférieure ou égale à 50% en poids d'au moins un copolyesteréther aromatique comprenant un mélange de téréphtalate de butylène et de téréphtalate d'hexylène.

2. Film de polyester suivant la revendication 1, dans lequel le copolyesteréther comprend un polybutylène glycol.

3. Film de polyester suivant l'une quelconque des revendications 1 et 2, dans lequel le polyester linéaire comprend un téréphtalate de polyéthylène.

4. Film de polyester suivant l'une quelconque des revendications précédentes, dans lequel le film de polyester a un facteur de voile inférieur à 1,0.

5. Film de polyester suivant l'une quelconque des revendications précédentes, dans lequel le film de polyester comprend de plus une couche thermosoudable comprenant un copolyester.

6. Film de polyester suivant la revendication 5, dans lequel le copolyester comprend du téréphtalate d'éthylène et de l'isophtalate d'éthylène.

7. Procédé pour la production d'un film de polyester autoporteur qui comprend un mélange orienté à l'échelle moléculaire comprenant une quantité supérieure ou égale à 50% en poids d'au moins un polyester linéaire et une quantité inférieure ou égale à 50% en poids d'au moins un copolyesteréther aromatique comprenant un mélange de téréphtalate de butylène et de téréphtalate d'hexylène, ce procédé comprenant le formage d'un extrudat du polyester linéaire fondu contenant le copolyesteréther, la trempe de l'extrudat et l'orientation de l'extrudat trempé dans une direction au moins.
